# FASCICULE DE BREVET EUROPEEN

(11) **EP 1 939 745 B1**
(45) Date de publication et mention de la délivrance du brevet: **06.05.2015**
(21) Numéro de dépôt: 07023108.9
(22) Date de dépôt: 29.11.2007
(51) Int. Cl.: G06F 11/07, G06F 21/00

(54) **Procédé et dispostif pour sécuriser la lecture d'une mémoire**
Verfahren und Vorrichtung zur Sicherung vom Speicherszugang
Method and device for securing the reading of a memory

(30) Priorité: 18.12.2006 FR 0610990
(43) Date de publication de la demande: 02.07.2008
(73) Titulaire: STMICROELECTRONICS SA, 92120 Montrouge (FR)
(72) Inventeur: Bancel, Frédéric, 13113 Lamanon (FR); Hely, David, 13120 Gardanne (FR); Berard, Nicolas, Le Puits Sainte Marie 13530 Trets (FR)
(74) Mandataire: Marchand, André

(56) Documents cités:
- EP-A- 1 713 023
- DE-A1- 10 251 477
- US-A1- 2004 210 737
- US-B1- 6 247 151
- HAGAI BAR-EL ET AL: "The Sorcerer's Apprentice Guide to Fault Attacks" INTERNET CITATION, [Online] 7 mai 2004 (2004-05-07), XP002329915 Extrait de l'Internet: URL:http://web.archive.org/web/20041016071 838/eprint.iacr.org/2004/100> [extrait le 2005-05-27]

## Description

La présente invention concerne la protection des circuits intégrés contre les attaques par injection d'erreur, et notamment la protection des circuits intégrés présents dans les cartes à puce.

La présente invention concerne plus particulièrement un procédé pour sécuriser la lecture d'une mémoire.

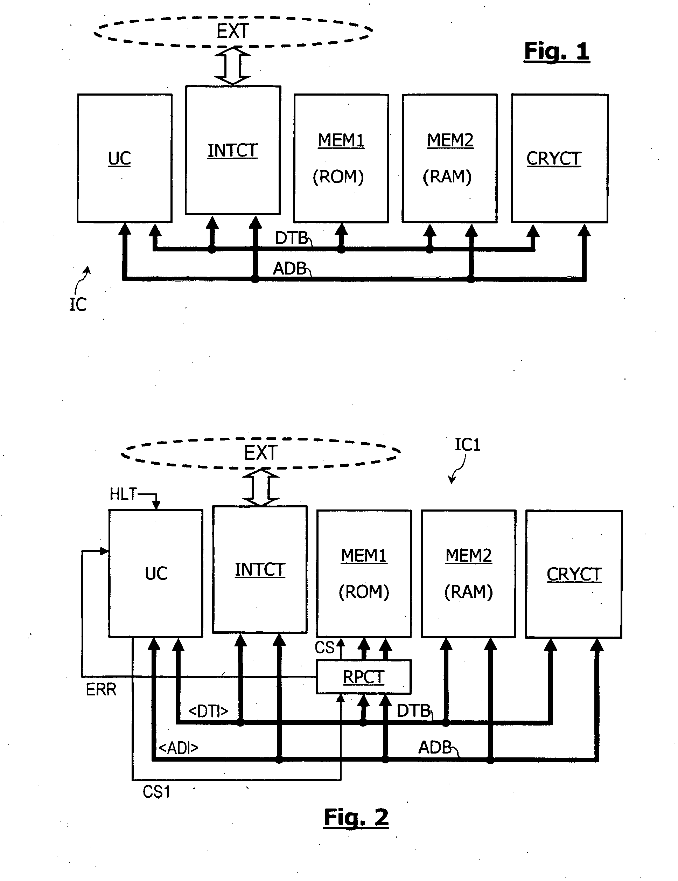

La figure 1 illustre un exemple d'application de l'invention à un circuit intégré IC pour carte à puce ou étiquette électronique. Le circuit intégré IC comprend une unité centrale UC de microprocesseur, une ou plusieurs mémoires non volatiles MEM1 (ROM, EEPROM, FLASH...), une mémoire volatile MEM2 (RAM), un circuit de cryptographie CRYCT permettant au circuit intégré de s'authentifier au cours d'une transaction, et un circuit d'interface INTCT lui permettant de communiquer avec des lecteurs de carte à puce ou d'étiquette électronique externes (EXT). L'unité centrale UC, les mémoires MEM1, MEM2 et le circuit CRYCT sont reliés entre eux par un bus de données DTB et un bus d'adresse ADB. Le circuit d'interface INTCT peut être du type à contact et comprendre par exemple des contacts ISO 7816 (contacts d'horloge, de données, d'alimentation, de masse...). Le circuit d'interface INTCT peut aussi être du type sans contact RFID (Radio Frequency Identification) et comprendre une bobine d'antenne RF ou un circuit d'antenne UHF, des circuits de modulation et démodulation de données sortantes et entrantes, un circuit extracteur d'horloge, etc.

Les circuits logiques présents dans les circuits intégrés sécurisés, comme les circuits intégrés pour carte à puce, font l'objet de diverses attaques de la part de fraudeurs qui cherchent à découvrir leur structure et/ou les secrets qu'ils comprennent. Il s'agit par exemple de circuits de cryptographie de type DES, AES, RSA..., de microprocesseurs programmés pour exécuter des algorithmes de cryptographie, de banques de registres contenant des clefs secrètes, etc.

A l'heure actuelle, les méthodes de piratage les plus avancées consistent à injecter des erreurs dans un circuit intégré lors de l'exécution d'opérations dites sensibles, par exemple des opérations d'authentification ou des opérations d'exécution d'un algorithme de cryptographie.

De telles attaques, appelées attaques par injection d'erreur ou injection de faute, peuvent intervenir pendant des phases de calculs dits sensibles, par exemple pendant des phases de calcul d'un code d'identification ou pendant la lecture d'une clef de cryptographie dans une mémoire. Elles permettent, en combinaison avec des modèles mathématiques et à partir de résultats faux obtenus intentionnellement grâce à des perturbations, de définir un élément secret comme une clef de cryptage ou un mot de passe, de déduire la structure d'un algorithme de cryptographie et/ou les clefs secrètes que l'algorithme utilise, etc.

En particulier, les attaques localisées consistent à introduire des perturbations (glitches) en un point déterminé du circuit, par exemple au moyen d'un faisceau laser ou un faisceau de rayon X. Une attaque localisée peut concerner la tension d'alimentation, un chemin de données, ou le signal d'horloge du circuit intégré.

La mémoire ROM ou EEPROM d'une carte à puce qui contient généralement des données ou des programmes sensibles sont particulièrement visées par ce type d'attaque. Bien qu'il soit impossible de modifier le contenu d'une mémoire ROM, une perturbation appliquée sur les étages de sortie ou les décodeurs d'adresse de la mémoire peut modifier la valseur d'une donnée ou d'une instruction de programme au moment de sa lecture dans la mémoire ou de sa transmission vers l'unité de traitement.

Pour contrer ce type d'attaque, il a déjà été envisagé de mémoriser pour chaque donnée stockée dans la mémoire une information de contrôle calculée à partir des bits de la donnée, et de vérifier à chaque lecture d'une donnée que l'information de contrôle mémorisée pour cette donnée correspond à l'information de contrôle calculée à partir des bits de la donnée lue. Selon la valeur de la donnée lue et les bits affectés par l'injection d'erreur, l'information de contrôle calculée sur la donnée corrompue peut correspondre à celle qui est mémorisée pour la donnée lue. Cette solution présente donc des failles.

Le document US 6 247 151 décrit un procédé de contrôle de l'intégrité de données stockées dans une mémoire comprenant un calcul de signature sur des données lues dans la mémoire, et la comparaison de la signature calculée avec une signature mémorisée, préalablement calculée lors d'une lecture précédente des données.

Le document US 2004/210737 décrit un procédé pour protéger un microprocesseur contre des manipulations de ses registres internes. Ce procédé consiste à faire une copie du contenu du registre à protéger, et à comparer à la demande le contenu du registre avec sa copie.

La présente invention vise une protection plus efficace des données lues dans une mémoire contre des attaques par injection d'erreur.

Ainsi, une idée de l'invention est de mémoriser une donnée lue avec son adresse de lecture et de vérifier que la donnée mémorisée correspond à la donnée figurant à l'adresse mémorisée lorsque la mémoire n'est pas accédée.

Plus précisément, l'invention concerne un procédé de lecture d'une donnée enregistrée dans une mémoire, le procédé comprenant des étapes de sélection d'une adresse de la mémoire où est enregistrée une donnée à lire, et de lecture de la donnée dans la mémoire à l'adresse sélectionnée.

Selon un mode de réalisation de l'invention, le procédé comprend des étapes consistant à : enregistrer la donnée lue dans un espace de stockage, en association avec l'adresse de la donnée lue dans la mémoire, et lorsque la mémoire n'est pas accédée : lire la donnée enregistrée dans l'espace de stockage et l'adresse enregistrée en association avec la donnée enregistrée, lire la donnée dans la mémoire en utilisant l'adresse enregistrée, comparer la donnée enregistrée dans l'espace de stockage à la donnée lue dans la mémoire, et activer un signal d'erreur si la donnée lue dans la mémoire est différente de la donnée enregistrée dans l'espace de stockage.

Selon un mode de réalisation de l'invention, plusieurs données sont lues dans la mémoire, chaque donnée lue dans la mémoire étant enregistrée dans l'espace de stockage en association avec son adresse dans la mémoire.

Selon un mode de réalisation de l'invention, plusieurs données lues à des adresses consécutives dans la mémoire sont enregistrées dans l'espace de stockage en association avec une seule adresse et un nombre correspondant au nombre de données enregistrées en association avec l'adresse.

Selon un mode de réalisation de l'invention, les données enregistrées dans l'espace de stockage sont vérifiées suivant un ordre aléatoire.

Selon un mode de réalisation de l'invention, les données lues dans la mémoire sont enregistrées aléatoirement dans l'espace de stockage.

Selon un mode de réalisation de l'invention, le procédé comprend une étape d'interruption de la lecture de la mémoire lorsque l'espace de stockage est plein, pour vérifier si les données enregistrées dans l'espace de stockage sont identiques aux données correspondantes dans la mémoire.

Selon un mode de réalisation de l'invention, l'interruption de la lecture de la mémoire est effectuée soit en bloquant le signal d'horloge cadençant une unité de traitement accédant à la mémoire, soit en déclenchant l'exécution par l'unité de traitement d'une routine d'attente mémorisée dans une autre mémoire.

L'invention concerne également un dispositif de protection de la lecture d'une mémoire. Selon un mode de réalisation de l'invention, le dispositif comprend :
- un espace de stockage pour enregistrer une donnée lue dans la mémoire, et une adresse de la mémoire en association avec la donnée enregistrée, des moyens configurés pour enregistrer dans ledit espace de stockage (REGB) une donnée lue dans la mémoire (MEM1) en association avec l'adresse de la donnée lue dans la mémoire (MEM1), et lorsque la mémoire n'est pas accédée :
- des moyens pour lire la donnée enregistrée (<DTI'>) dans l'espace de stockage (REGB) en association avec l'adresse (<ADI>) de la mémoire lue dans la mémoire (MEM1), et pour lire la donnée dans la mémoire en utilisant l'adresse enregistrée,
- un comparateur pour comparer la donnée enregistrée dans l'espace de stockage à la donnée lue dans la mémoire, et
- des moyens pour activer un signal d'erreur si la donnée enregistrée dans l'espace de stockage est différente de la donnée lue dans la mémoire.

Selon un mode de réalisation de l'invention, l'espace de stockage mémorise plusieurs données et pour chaque donnée enregistrée, l'adresse de la donnée dans la mémoire.

Selon un mode de réalisation de l'invention, l'espace de stockage mémorise une seule adresse pour un ensemble de données enregistrées se trouvant à des adresses consécutives dans la mémoire, et un nombre correspondant au nombre de données dans l'ensemble de données.

Selon un mode de réalisation de l'invention, les données sont enregistrées dans l'espace de stockage dans une pile gérée en mode FIFO ou LIFO.

Selon un mode de réalisation de l'invention, les données et les adresses sont enregistrées dans l'espace de stockage dans une pile gérée en mode FIFO ou LIFO.

Selon un mode de réalisation de l'invention, le dispositif est intégré à la mémoire à protéger.

L'invention concerne également un circuit intégré comprenant une unité de traitement et une mémoire lue par l'unité de traitement. Selon un mode de réalisation de l'invention, le circuit intégré comprend un dispositif de protection tel que défini précédémment, pour enregistrer chaque donnée lue dans la mémoire par l'unité de traitement et pour vérifier chaque donnée enregistrée lorsque l'unité de traitement n'accède pas à la mémoire.

Selon un mode de réalisation de l'invention, le dispositif de protection comprend un multiplexeur disposé sur un bus d'adresse connecté en entrée à un bus d'adresse de l'unité centrale et à l'espace de stockage, et en sortie au bus d'adresse de la mémoire, pour appliquer à la mémoire une adresse de lecture provenant soit de l'unité centrale, soit de l'espace de stockage.

Selon un mode de réalisation de l'invention, le dispositif de protection comprend des moyens pour commander la lecture de la mémoire lorsque l'unité centrale n'accède pas à la mémoire.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 décrite précédemment représente sous forme de blocs un circuit intégré,
- la figure 2 représente sous forme de blocs un circuit intégré équipé d'un dispositif de protection selon l'invention,
- la figure 3 représente sous forme de blocs le dispositif de protection,
- la figure 4 représente un dispositif de protection selon un premier mode de réalisation de l'invention,
- la figure 5 représente un dispositif de protection selon un second mode de réalisation de l'invention,
- la figure 6 représente un dispositif de protection selon un troisième mode de réalisation de l'invention,
- la figure 7 est un schéma électronique d'un circuit séquenceur du dispositif de protection représenté sur la figure 6,
- la figure 8 est un schéma électronique d'un circuit du circuit séquenceur représenté sur la figure 7,
- la figure 9 représente un dispositif de protection selon un quatrième mode de réalisation de l'invention.

La figure 2 représente un circuit intégré IC1 pour carte à puce ou étiquette électronique. Le circuit intégré IC1 comprend une unité centrale UC de microprocesseur, une ou plusieurs mémoires non volatiles MEM1 (ROM, EEPROM, FLASH...), une mémoire volatile MEM2 (RAM), un circuit de cryptographie CRYCT permettant au circuit intégré de s'authentifier au cours d'une transaction, et un circuit d'interface INTCT lui permettant de communiquer avec des lecteurs de carte à puce ou d'étiquette électronique externes (EXT). L'unité centrale UC, les mémoires MEM1, MEM2 et le circuit CRYCT sont reliés entre eux par un bus de données DTB et un bus d'adresse ADB. Le circuit d'interface INTCT peut être du type à contact et comprendre par exemple des contacts ISO 7816 (contacts d'horloge, de données, d'alimentation, de masse...). Le circuit d'interface INTCT peut aussi être du type sans contact RFID (Radio Frequency Identification) et comprendre une bobine d'antenne RF ou un circuit d'antenne UHF, des circuits de modulation et démodulation de données sortantes et entrantes, un circuit extracteur d'horloge, etc.

Selon l'invention, le circuit intégré IC1 est équipé d'un dispositif de protection RPCT, assurant la détection d'erreurs dans les données lues dans la mémoire MEM1. Le dispositif RPCT est interposé sur les bus de donnée et d'adresse d'entrée/sortie de la mémoire MEM1. Le dispositif RPCT reçoit également de l'unité centrale UC le signal de sélection CS1 de la mémoire MEM1 et transmet à la mémoire MEM1 un signal CS d'activation qui est déterminé en fonction du signal CS1. Le dispositif RPCT fournit un signal d'erreur ERR qui est par exemple envoyé sur une entrée de l'unité centrale UC.

Il est à noter que le dispositif RPCT peut être intégré à la mémoire MEM1.

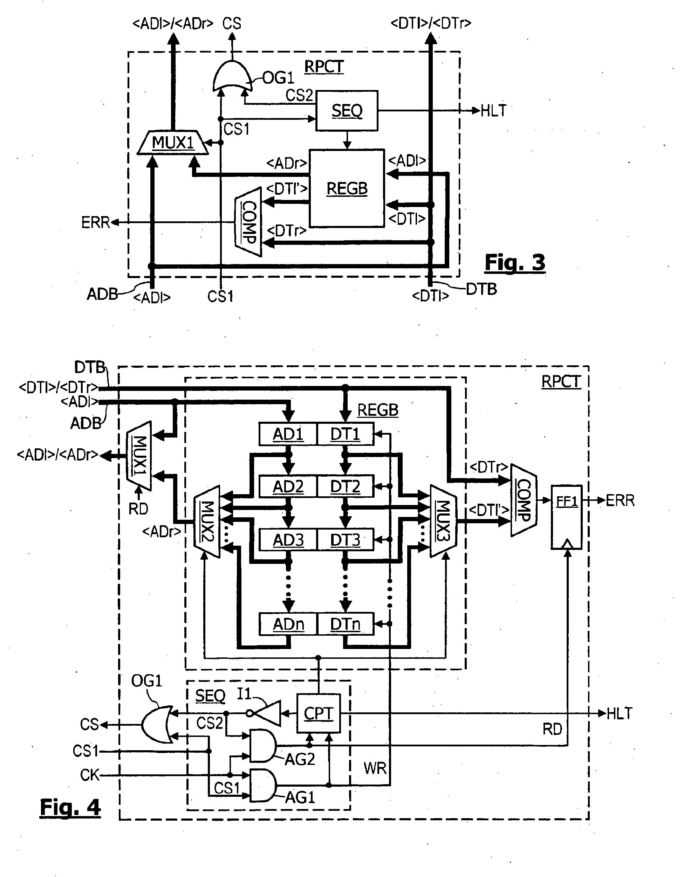

Sur la figure 3, le dispositif RPCT comprend un multiplexeur MUX1, un séquenceur SEQ, un espace de stockage REGB d'adresses et de données lues dans la mémoire MEM1, un comparateur COMP et une porte logique OG1 de type OU. Une entrée du multiplexeur MUX1 est connectée au bus d'adresse ADB interconnectant l'unité centrale UC et les autres circuits (INTCT, MEM1, MEM2, CRYCT) du circuit intégré IC1. La sortie du multiplexeur MUX1 est connectée à l'entrée de bus d'adresse de la mémoire MEM1. L'espace de stockage REGB est connecté en entrée aux bus d'adresse ADB et de donnée DTB. L'espace de stockage REGB comprend une sortie d'adresse <ADr> connectée à une entrée du multiplexeur MUX1 et une sortie de donnée <DTI'> connectée à une entrée du comparateur COMP dont une autre entrée est connectée au bus DTB. Le comparateur fournit le signal d'erreur ERR. Le séquenceur SEQ commande l'accès aux registres REGB et reçoit de l'unité centrale UC un signal de sélection CS1 de la mémoire MEM1. Le séquenceur SEQ génère un signal de sélection CS2 de la mémoire MEM1. Les signaux de sélection CS1, CS2 sont fournis aux entrées de la porte OG1 dont la sortie fournit un signal de sélection CS qui est appliqué à la mémoire MEM1.

L'espace de stockage REGB comprend par exemple un ensemble de registres comportant chacun un champ d'adresse et un champ de donnée. Chacun des registres de l'espace REGB est constitué de n bits, n étant égal à la somme du nombre de bits d'une donnée et du nombre de bits d'une adresse. Le nombre de registres de l'espace REGB est limité à quelques unités. Lorsqu'une donnée <DTI> est lue par l'unité centrale UC dans la mémoire MEM1, elle est stockée dans le champ de donnée de l'un des registres de l'espace de stockage REGB. L'adresse <ADI> à laquelle la donnée est lue est stockée dans le champ d'adresse du registre où est stockée la donnée correspondante.

Lorsque la mémoire MEM1 n'est pas accédée par l'unité centrale UC (signal CS1 inactif), le séquenceur SEQ active la lecture de la mémoire MEM1 en activant le signal CS2 et en commandant la lecture d'une donnée <DTI'> et d'une adresse correspondante <ADr> dans l'espace REGB. L'adresse <ADr> est appliquée à la mémoire par l'intermédiaire du multiplexeur MUX1 et la donnée <DTI'> est fournie au comparateur COMP. La donnée <DTr> se trouvant dans la mémoire MEM1 à l'adresse <ADr> est ainsi appliquée au comparateur COMP qui la compare à la donnée <DTI'> lue dans l'espace REGB. Si une différence entre les données reçues par le comparateur est détectée, le signal ERR en sortie du comparateur passe à l'état actif, signalant une erreur de lecture de la mémoire MEM1.

Le signal d'erreur ERR est par exemple envoyé par le circuit RPCT à l'unité centrale UC pour lui permettre de prendre des mesures d'urgence en réponse à l'activation du signal ERR. Le signal d'erreur ERR peut ainsi être appliqué à un décodeur d'interruption qui fournit à l'unité centrale UC un vecteur d'interruption lorsque le signal d'erreur ERR présente la valeur active. L'unité centrale exécute alors une routine d'interruption dédiée. Alternativement, le signal d'erreur ERR peut être appliqué à un circuit de protection à logique câblée spécifiquement prévu à cet effet. Les mesures d'urgence, qu'elles soient mises en oeuvre par une routine d'interruption exécutée par l'unité centrale ou par un circuit externe, peuvent consister par exemple à provoquer une remise à zéro hardware de l'unité centrale, un effacement, une destruction ou un verrouillage de certaines parties des mémoires, etc.

L'espace de stockage REGB comprend avantageusement un nombre de registres permettant d'enregistrer toutes les données correspondant à une ou plusieurs instructions et aux paramètres de celles-ci. En outre, le programme exécuté par l'unité centrale UC est de préférence conçu de manière que le nombre de cycles successifs de lecture de la mémoire MEM1 soit inférieur ou égal au nombre de registres dans l'espace de stockage, et que le nombre de cycles durant lesquels la mémoire MEM1 est sélectionnée (signal CS1 actif) soit plus faible que le nombre de cycles durant lesquels la mémoire n'est pas sélectionnée (signal CS1 inactif). Ainsi, on évite que l'espace de stockage REGB soit saturé.

Dans le cas contraire, on peut prévoir d'activer un signal d'arrêt HLT lorsque l'espace de stockage REGB est plein. Le signal HLT peut être utilisé pour arrêter l'horloge qui cadence l'unité centrale UC, sans arrêter celle qui cadence la mémoire MEM1 et le dispositif RPCT. Alternativement, le signal HLT peut être fourni à l'unité centrale UC pour déclencher une interruption du programme qu'elle exécute. Lorsque l'unité UC est interrompue, le dispositif RPCT peut accéder à la mémoire MEM1 afin de vérifier toutes les données stockées dans l'espace de stockage REGB. L'interruption de l'unité centrale UC peut être effectuée de deux manières. Soit le signal HLT est appliqué à l'unité centrale UC comme un signal d'interruption, soit l'unité centrale surveille périodiquement l'état de ce signal (polling). Dans le cas où le signal HLT est un signal d'interruption de l'unité centrale UC, les vecteurs d'interruption sont stockés dans une autre mémoire. Dans les deux cas, lorsque le signal HLT est activé, l'unité centrale exécute une routine d'attente durant laquelle l'unité centrale n'accède pas à la mémoire MEM1. A cet effet, la routine d'attente est mémorisée dans une autre mémoire que la mémoire MEM1. La durée de la routine d'attente est avantageusement ajustée à la durée prévue de la phase de vérification des données enregistrées par le dispositif RPCT lorsque l'espace de stockage REGB est plein.

Dans la description qui suit de modes de réalisation du dispositif RPCT, divers signaux dont la prévision est à la portée de l'homme de l'art n'ont pas été décrits dans un souci de simplicité, seuls les signaux nécessaires à la compréhension de l'invention étant décrits. Ainsi, si les signaux permettant d'initialiser les registres et les bascules du dispositif RPCT n'ont pas été décrits, il va de soi que de tels signaux d'initialisation doivent être prévus.

La figure 4 représente un premier mode de réalisation du dispositif RPCT et en particulier de l'espace de stockage REGB et du séquenceur SEQ.

L'espace de stockage REGB comprend plusieurs registres d'adresse AD1-ADn montés en série comprenant chacun une entrée et une sortie, et autant de registres de donnée DT1-DTn montés en série comprenant chacun également une entrée et une sortie. L'entrée d'un premier registre d'adresse AD1 est connectée au bus ADB, et l'entrée d'un premier registre de donnée DT1 est connectée au bus de donnée DTB. L'entrée de chacun des autres registres d'adresse AD2-ADn est connectée à la sortie d'un registre d'adresse précédent AD1-ADn-1. De même, l'entrée de chacun des autres registres de donnée DT2-DTn est connectée à la sortie d'un registre de donnée précédent DT1-DTn-1. La sortie de chaque registre AD1-ADn est également connectée à l'entrée d'un multiplexeur MUX2 dont la sortie est connectée à l'entrée du multiplexeur MUX1. La sortie de chaque registre DT1-DTn est connectée à l'entrée d'un multiplexeur MUX3 dont la sortie est connectée à l'entrée du comparateur COMP.

Les registres d'adresse AD1-ADn et de donnée DT1-DTn sont gérés à la manière d'une pile de type FIFO (First In, First Out) : à chaque fois qu'une nouvelle donnée et son adresse sont mémorisées dans les premiers registres AD1, DT1, le contenu des registres est décalé dans le même sens (de AD1 vers AD2 et de DT1 vers DT2).

Le séquenceur SEQ comprend un compteur CPT qui commande les multiplexeurs MUX2 et MUX3 de manière à lire successivement les registres. Le séquenceur comprend également deux portes logiques AG1, AG2 de type ET recevant un signal d'horloge CK cadençant la lecture de la mémoire MEM1. La porte AG1 reçoit le signal de sélection CS1. Le compteur fournit un signal de dépassement lorsqu'il est à 0, ce signal étant inversé par un inverseur I1 pour produire le signal CS2 qui est fourni à la porte AG2. La porte AG1 fournit un signal de commande d'écriture WR et la porte AG2 fournit un signal de commande de lecture RD. Les signaux RD et WR commandent le compteur CPT. Le signal RD commande le multiplexeur MUX1. Le signal WR commande l'écriture des registres AD1-ADn et DT1-DTn.

Le dispositif RPCT comprend une bascule FF1 recevant le signal de sortie du comparateur COMP et le signal RD sur une entrée de signal d'horloge, et fournissant le signal d'erreur ERR. La bascule FF1 permet de synchroniser le signal ERR avec les cycles de lecture et de mémoriser l'activation du signal ERR en cas de détection d'une erreur.

Lorsque l'unité centrale UC lit une donnée dans la mémoire MEM1 (signaux CS1 à 1, CS2 à 0, RD à 0 et WR à 1), la donnée lue et l'adresse de lecture sont stockées respectivement dans le registre DT1 et dans le registre AD1. Avant qu'une autre adresse et une autre donnée soient stockées dans les registres AD1 et DT1, les contenus des registres AD1-ADn-1 et DT1-DTn-1 sont transférés dans les registres suivants AD2-ADn et DT2-DTn. Les contenus des derniers registres ADn et DTn sont donc perdus. Le compteur CPT est incrémenté de 1 à chaque nouvelle écriture dans les registres AD1 et DT1 par le signal RD à 1. Si lors d'un cycle, la mémoire MEM1 n'est pas lue (CS1 = 0 lorsque CK passe à 1), les signaux CS2 et RD passent à 1 et le signal WR passe à 0. Le compteur CPT est alors décrémenté de 1 et le registre dont la position correspond à la valeur du compteur est lu par les multiplexeurs MUX2, MUX3. L'adresse <ADr> contenue dans le registre d'adresse lu est ainsi envoyée à la mémoire MEM1 par le multiplexeur MUX2, et la donnée <DTI'> contenue dans le registre de donnée lu est fournie au comparateur COMP. La donnée <DTr> lue dans la mémoire MEM1 à l'adresse <ADr> est envoyée sur l'autre entrée du comparateur COMP. La bascule FF1 mémorise l'état du signal ERR en sortie du comparateur au front montant du signal RD.

Pour éviter de perdre des données à chaque décalage du contenu des registres AD1-ADn, DT1-DTn, la lecture et la vérification des données mémorisées dans l'espace de stockage REGB peuvent être effectuées à une cadence plus rapide que la lecture de la mémoire MEM1 par l'unité UC, si la mémoire le permet. Alternativement, le programme exécuté par l'unité centrale peut comprendre des boucles d'attente mémorisées dans une autre mémoire (activée par un autre signal de sélection). Une autre solution consiste à générer un signal HLT lorsque le compteur a atteint la valeur du nombre n de registres AD1-ADn ou DT1-DTn. Le signal HLT est envoyé à l'unité centrale UC ou à l'horloge générale du circuit intégré IC1 (distincte de l'horloge qui cadence la relecture de la mémoire MEM1 et la bascule FF1), de manière à interrompre l'exécution du programme et à permettre au dispositif RPCT de vérifier les données stockées dans l'espace de stockage. Lorsque tout ou partie des données stockées dans l'espace de stockage REGB a été vérifiée (valeur du compteur CPT inférieure à n), le signal HLT repasse à 0 pour permettre à l'unité UC de poursuivre l'exécution du programme.

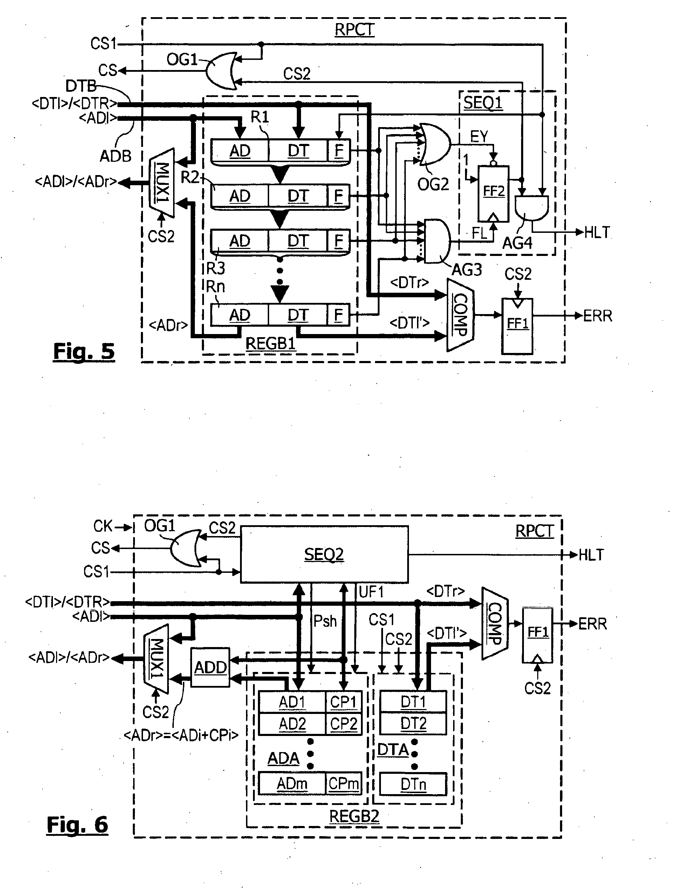

La figure 5 représente un autre mode de réalisation du dispositif RPCT. Sur la figure 5, le dispositif RPCT comprend, comme le dispositif représenté sur la figure 3, un espace de stockage REGB1, un séquenceur SEQ1, le multiplexeur MUX1, le comparateur COMP, la bascule FF1 et la porte OG1. L'espace de stockage REGB1 comprend plusieurs registres R1-Rn comportant chacun un champ d'adresse AD, un champ de donnée DT et un champ d'état F indiquant si le registre est libre ou occupé. Le champ d'adresse AD d'un premier registre R1 est connecté en entrée au bus d'adresse ADB, le champ de donnée DT du registre R1 est connecté en entrée au bus DTB, et le champ F de ce registre reçoit la valeur du signal de sélection CS1. Chacun des registres R1-Rn-1 sauf un dernier registre Rn comprend une sortie connectée à l'entrée d'un registre suivant R2-Rn. Le dernier registre Rn comprend une sortie d'adresse connectée à une entrée du multiplexeur MUX1, et une sortie de donnée connectée à une entrée du comparateur COMP. Lorsque le registre R1 est accédé en écriture, le champ d'état F de ce registre est mis à 1. Les registres R1-Rn sont gérés à la manière d'une pile de type FIFO (First In, First Out).

Le dispositif RPCT comprend également une porte logique AG3 de type ET et une porte logique OG2 de type OU, recevant chacune en entrée la valeur de chacun des champs d'état F des registres R1-Rn. La sortie de chacune des portes logiques AG3, OG2 est connectée au séquenceur SEQ1. La sortie de la porte AG3 fournit un signal FL à 1 lorsque tous les registres de l'ensemble REGB1 sont occupés (champ F à 1). La sortie de la porte OG2 fournit un signal EY à 0 lorsque tous les registres de l'ensemble REGB1 sont libres (champ F à 0).

Le séquenceur SEQ1 fournit un signal HLT qui passe à 1 lorsque tous les registres de l'ensemble REGB1 sont occupés et qui passe à 0 lorsque tous les registres R1-Rn sont libres.

Lorsque tous les registres sont remplis (signal FL à 1), si le programme exécuté par l'unité centrale UC n'accède pas à la mémoire MEM1 au cycle de lecture suivant, la donnée la plus ancienne stockée dans le registre Rn est vérifiée. Si le programme tente d'accéder à la mémoire MEM1 au cycle de lecture suivant, le signal HLT passe à 1, ce qui interrompt l'exécution du programme par l'unité UC.

Le séquenceur SEQ1 commande l'ensemble de registres REGB1 pour déclencher la lecture du premier registre écrit (registre Rn), et ainsi comparer la donnée <ADI'> stockée dans le registre à la donnée <ADr> lue dans la mémoire MEM1 à l'adresse <ADr> stockée dans le registre Rn. A chaque lecture d'un registre, le contenu des registres R1-Rn est décalé. A chaque décalage du contenu des registres, le contenu du champ F du premier registre R1 est mis à 0. Lorsque le signal EY passe à 0, toutes les données stockées dans les registres R1-Rn ont ainsi été vérifiées, et le signal HLT passe à 0.

Le séquenceur SEQ1 peut être réalisé à l'aide d'une bascule FF2 dont l'entrée est forcée à 1 et d'une porte logique AG4 de type ET. Le signal FL est transmis à l'entrée de signal d'horloge de la bascule FF2 pour déclencher la bascule lorsque le signal FL passe à 1. Le signal EY est transmis à une entrée d'initialisation de la bascule FF2 pour initialiser cette dernière lorsque le signal EY passe à 0. La sortie directe de la bascule FF2 fournit le signal CS2 qui est envoyé à une entrée de la porte AG4. La porte AG4 reçoit également en entrée le signal CS1 et fournit le signal HLT. Ainsi, le signal HLT passe à 1 lorsque les signaux CS1 et CS2 sont simultanément à 1.

La figure 6 représente un autre mode de réalisation du dispositif RPCT. Sur la figure 6, le dispositif RPCT comprend, comme le dispositif représenté sur la figure 3, un espace de stockage REGB2 des données à vérifier avec leurs adresses, un séquenceur SEQ2, le multiplexeur MUX1, le comparateur COMP, la bascule FF1, et la porte OG1.

L'espace de stockage REGB2 comprend une pile de stockage d'adresses ADA et une pile de stockage de données DTA, ces deux piles étant gérées en mode LIFO (Last In - First Out). La pile ADA peut stocker m adresses AD1-ADm chacune en association avec la valeur d'un compteur CP1-CPm. La pile DTA peut stocker n données DT1-DTn, n étant égal à m fois la valeur de comptage maximum des compteurs CP1-CPm.

Le dispositif RPCT comprend également un circuit additionneur pour additionner la valeur de la dernière adresse AD1 mémorisée dans la pile ADA à la valeur du compteur CP1 associé. La sortie de l'additionneur ADD est connectée à l'entrée du multiplexeur MUX1. Ainsi, l'adresse <ADr> qui est fournie par le multiplexeur MUX1 est égale à AD1 + CP1.

Lors de la lecture de la mémoire, la pile d'adresses ADA est décalée vers le bas à chaque front montant d'un signal Psh fourni par le séquenceur SEQ2, et la pile de données DTA est décalée vers le bas à chaque front montant du signal CS1. Lors de la vérification des données stockées dans l'espace de stockage REGB2, la pile d'adresses ADA est décalée vers le haut à chaque front montant d'un signal UF1 fourni par le séquenceur SEQ2, et la pile de données DTA est décalée vers le haut à chaque front montant du signal CS2.

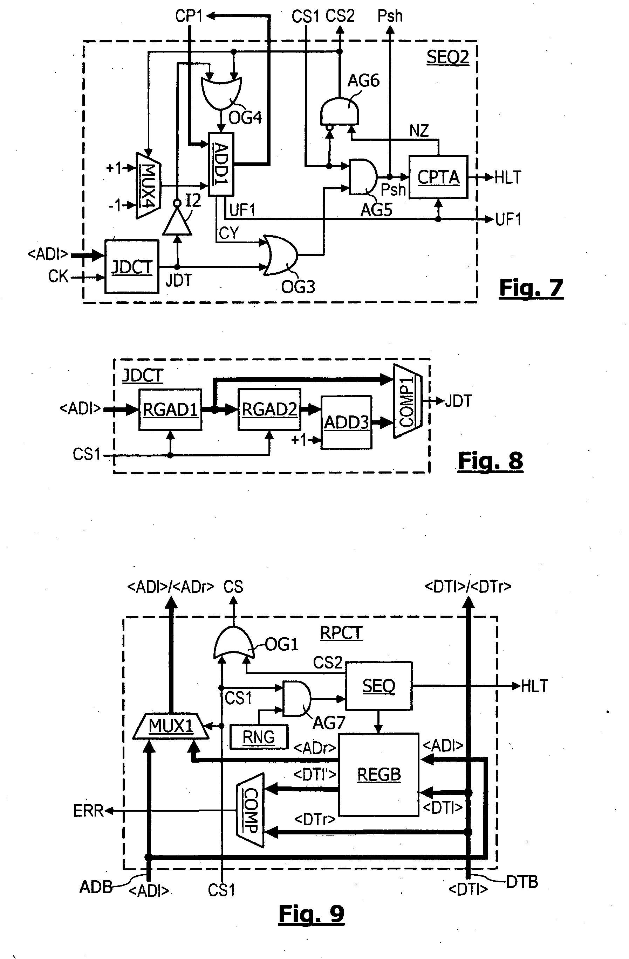

La figure 7 représente un mode de réalisation du séquenceur SEQ2. Le séquenceur SEQ2 comprend un circuit de détection de saut d'adresses JDCT, un additionneur ADD1, un inverseur I2, une porte logique OG3 de type OU, deux portes logiques AG5, AG6 de type ET, et un compteur d'adresses CPTA. Le séquenceur SEQ2 comprend également un multiplexeur MUX4, et une porte logique OG4 de type OU. Le circuit JDCT détecte les sauts d'adresses lors de la lecture de la mémoire MEM1, et fournit un signal de détection de saut qui est envoyé à l'entrée de l'inverseur I2 et à l'entrée de la porte OG3. Le signal de sortie de l'inverseur 12 est envoyé à une entrée de la porte OG4 dont la sortie permet de déclencher l'additionneur ADD1.

L'additionneur ADD1 reçoit sur une entrée la valeur du premier compteur CP1 de la pile ADA et sur une autre entrée, une valeur égale à +1 ou -1 sélectionnée par le multiplexeur MUX4. A chaque fois que l'additionneur ADD1 est déclenché, il fournit en sortie la valeur du compteur CP1 incrémentée ou décrémentée de 1, qui est inscrite dans la zone de mémorisation du compteur CP1 dans la pile ADA. L'additionneur ADD1 fournit un signal de retenue CY qui est activé lorsque l'additionneur est en dépassement de capacité par valeur supérieure, c'est-à-dire lorsque le compteur CP1 dépasse sa valeur maximum. Le signal CY est fourni à l'entrée de la porte OG3. La sortie de la porte OG3 est connectée à l'entrée de la porte AG5 dont la sortie fournit le signal Psh envoyé par le séquenceur SEQ2 à la pile ADA. Le signal Psh est envoyé à l'entrée du compteur CPTA pour déclencher un comptage. Le signal CS1 est envoyé sur une entrée inversée de la porte AG6 dont la sortie fournit le signal CS2. Le signal CS2 est envoyé à une entrée de la porte OG4 et à une entrée de commande du multiplexeur MUX4. Ainsi, la valeur du compteur CP1 est incrémentée ou décrémentée de 1 à chaque fois qu'il est déclenché selon la valeur du signal CS2 commandant le multiplexeur MUX4. L'additionneur ADD1 fournit un signal de dépassement de capacité UF1 qui est activé lorsque l'additionneur est en dépassement de capacité par valeur inférieure, c'est-à-dire lorsque le compteur dépasse sa valeur minimum, soit 0. Le signal UF1 déclenche un décomptage du compteur CPTA. Le compteur CPTA fournit un signal NZ qui s'active lorsque le compteur n'est plus à 0, et un signal de dépassement de capacité correspondant au signal HLT fourni par le séquenceur SEQ2. Le signal NZ est fourni à l'entrée de la porte AG6.

A l'initialisation du circuit intégré, l'ensemble de l'espace de stockage REGB2 est vide. A la première lecture dans la mémoire MEM1, l'adresse de lecture <ADI> dans la mémoire MEM1 est stockée dans un premier registre AD1 de la pile d'adresse ADA et le compteur CP1 associé est incrémenté de 1. La donnée <DTI> lue dans la mémoire MEM1 à l'adresse <ADI> est stockée dans un premier registre DT1 de la pile de donnée DTA.

A la seconde lecture dans la mémoire MEM1, si l'adresse lue est égale à l'adresse de lecture précédente <ADI> incrémentée de 1 (signal JDT à 0), l'adresse de lecture n'est pas mémorisée, mais le compteur CP1 associé au premier emplacement de la zone ADA est incrémenté, et la nouvelle donnée <DTI> lue dans la mémoire MEM1 est stockée dans le premier registre DT1 de la pile de donnée DTA après décalage de cette dernière. Ainsi, tant que des adresses successives sont lues dans la mémoire MEM1, aucune nouvelle adresse n'est mémorisée dans la pile ADA. Le compteur CP1 est simplement incrémenté et les données lues sont mémorisées successivement dans la pile de donnée DTA.

Si un saut d'adresse est détecté par le circuit JDCT (signal JDT à 1), ou si le compteur CP1 arrive en dépassement de capacité (signal CY à 1), le signal Psh passe à 1, ce qui déclenche un comptage du compteur CPTA, et un décalage de la pile ADA. L'adresse de lecture ADI est alors stockée dans le registre AD1 de la pile ADA et le compteur CP1 à 0 est incrémenté de 1 par l'additionneur ADD1. Comme le compteur CPTA n'est plus à 0, le signal NZ passe à 1. Il en résulte que si le signal CS1 passe à 0, le signal CS2 passe à 1 déclenchant une phase de vérification des données mémorisées dans la pile DTA.

Lorsque la pile d'adresse ADA est pleine et que le signal CS1 est encore à 1, si un comptage du compteur CPTA est déclenché (signal Psh à 1), le comptage se trouve alors en dépassement de capacité, ce qui fait passer le signal HLT à 1.

Il en résulte que lorsque la mémoire MEM1 n'est pas lue ou que le signal HLT passe à 1, les données mémorisées dans l'espace de stockage REGB2 sont vérifiées. A cet effet, le séquenceur SEQ2 lit la donnée mémorisée dans le premier registre DT1 de la pile DTA, ainsi que l'adresse AD1 et la valeur du compteur associé CP1 mémorisés dans le premier registre de la pile ADA. L'adresse lue AD1 est additionnée par l'additionneur ADD à la valeur lue du compteur CP1. L'adresse ainsi obtenue <ADr> (= AD1 + CP1) correspond à l'adresse dans la mémoire MEM1 de la donnée lue DT1 dans la pile DTA. Le comparateur COMP compare la donnée DT1 à la donnée lue dans la mémoire MEM1 à l'adresse <ADr>. A chaque lecture d'une donnée dans la pile DTA, la valeur du premier compteur CP1 mémorisé dans la pile ADA est décrémentée par l'additionneur ADD1. Lorsque l'additionneur ADD1 fournit un résultat négatif (UF1 = 1), le compteur CPTA est décrémenté de 1 et la pile ADA est décalée vers le haut (signal Psh à 1). Lorsque le compteur CPTA atteint la valeur 0, le signal NZ passe à 0, ce qui fait passer le signal CS2 à 0.

La figure 8 représente un mode de réalisation du circuit JDCT. Le circuit JDCT comprend deux registres d'adresse RGAD1, RGAD2 en série, un circuit additionneur ADD2 et un comparateur COMP1. Le registre RGAD1 est connecté au bus d'adresse ADB du circuit intégré ICI. Le registre RGAD2 est connecté à la sortie du registre RGAD1. La sortie du registre RGAD2 est connectée à une entrée de l'additionneur ADD2 dont une autre entrée reçoit la valeur 1. Les registres RGAD1 et RGAD2 sont commandés en écriture par le signal CS1. Ainsi, au début de chaque cycle de lecture de la mémoire programme, indiqué par le signal CS1, le registre RGAD1 est chargé avec l'adresse circulant sur le bus d'adresse ADB, et le registre RGAD2 est chargé avec l'adresse mémorisée dans le registre RGAD1 au cycle de lecture précédent. L'adresse mémorisée dans le registre RGAD2 est incrémentée de un par le circuit additionneur ADD2, puis appliquée à une entrée du comparateur COMP1. L'adresse mémorisée dans le registre RGAD1 est appliquée sur une autre entrée du comparateur COMP1. De cette manière, le signal JDT fourni par le comparateur COMP1 indique si les deux dernières adresses successives de lecture de la mémoire MEM1 sont ou non consécutives.

Au début de l'exécution d'un programme, à la suite de l'initialisation du circuit JDCT, les deux registres RGAD1 et RGAD2 mémorisent une valeur initiale qui ne correspond pas à la première adresse de lecture de la mémoire programme MEM1. Il est donc préférable d'inhiber le circuit pendant deux cycles de lecture nécessaires au chargement du registre RGAD2 avec la première adresse de lecture de la mémoire programme MEM1.

Les mécanismes de mémorisation et de vérification mis en oeuvre par le dispositif RPCT sont déterministes. S'il est possible de reproduire une injection d'erreur au moment de la vérification d'une donnée précédemment lue dans la mémoire MEM1, l'injection d'erreur ne sera pas détectée. Bien qu'une telle attaque apparaisse difficile à réaliser puisqu'il faut injecter deux fois la même erreur précisément aux moments où une donnée est lue puis vérifiée dans la mémoire MEM1, il peut être avantageux de supprimer ce risque de ne pas détecter une injection d'erreur.

Dans cette optique, la figure 9 représente un autre mode de réalisation du dispositif de protection selon l'invention. Dans ce mode de réalisation, le dispositif de protection RPCT comprend l'un des circuits RPCT précédemment décrits en référence aux figures 3 à 6. Le dispositif de protection comprend également un générateur de donnée binaire aléatoire RNG connecté à une entrée d'une porte logique AG7 de type ET dont une autre entrée reçoit le signal de sélection CS1. La sortie de la porte AG7 est connectée à une entrée du signal CS1 du séquenceur SEQ (SEQ, SEQ1 ou SEQ2). De cette manière, les données qui sont lues dans la mémoire MEM1 et qui sont fournies au circuit RPCT sont choisies aléatoirement. Ainsi tous les accès à la mémoire MEM1 ne sont pas sauvegardés et donc ne sont pas vérifiables.

Alternativement, une composante aléatoire peut être introduite, non pas dans la mémorisation des données et des adresses lues dans la mémoire MEM1, mais dans le séquenceur SEQ (ou SEQ1) pour agir sur l'ordre de lecture suivant lequel les données et les adresses sont lues dans l'espace de stockage REGB (ou REGB1) durant la phase de vérification.

Pour modifier l'ordre suivant lequel les données sont lues dans l'espace de stockage, on peut par exemple initialiser avec une valeur aléatoire le compteur CPT représenté sur la figure 4, de manière à choisir aléatoirement la première donnée à vérifier. Dans ce cas, un second compteur est prévu pour décompter le nombre de données à vérifier et arrêter la phase de vérification lorsque toutes les données enregistrées ont été vérifiées.

Dans le cas où l'espace de stockage est accédé en écriture ou en lecture d'une manière aléatoire, il peut être réalisé à partir d'une mémoire dont chaque emplacement est adressable individuellement.

Dans tous les modes de réalisation précédemment décrits, il peut être prévu d'effectuer plusieurs fois la vérification de la même donnée dans la mémoire MEM1, ceci afin d'améliorer l'étendue de la vérification et d'éviter les attaques par synchronisation. Le nombre de vérifications de la même donnée est choisi aléatoirement. Dans les modes de réalisation dans lequel l'espace de stockage (REGB1 ou REGB2) est une pile FIFO ou LIFO (figures 5 et 6), il convient de bloquer la pile lors de sa relecture, lorsque d'autres vérifications de la même donnée doivent être effectuées.

Il apparaîtra clairement à l'homme de l'art que la présente invention est susceptible de diverses variantes de réalisation et d'applications. En particulier, l'invention s'applique à tout type de mémoire non volatile, et pas uniquement à des instructions de programme, sachant que les données enregistrées dans l'espace de stockage ne doivent pas être modifiées entre le moment où elles sont lues et le moment où elles sont vérifiées. On peut ainsi prévoir d'effectuer une vérification des données de manière à "vider" l'espace de stockage avant d'effectuer une écriture dans la mémoire.

La prévision du signal HLT n'est pas indispensable. En effet, selon les applications, il peut être acceptable de ne pas vérifier toutes les données enregistrées dans l'espace de stockage. Alternativement, le programme exécuté par l'unité de traitement UC peut comporter des instructions d'attente mémorisées dans une autre mémoire que la mémoire MEM1, pour permettre au dispositif RPCT de vérifier les données enregistrées dans la mémoire MEM1.

## Revendications

1. Procédé de lecture d'une donnée enregistrée dans une mémoire (MEM1), le procédé comprenant des étapes de sélection d'une adresse (<ADI>) de la mémoire où est enregistrée une donnée à lire (<DTI>), et de lecture de la donnée dans la mémoire à l'adresse sélectionnée,
**caractérisé en ce qu'**il comprend des étapes consistant à :
- enregistrer la donnée lue (<DTI>) dans un espace de stockage (REGB), en association avec l'adresse (<ADI>) de la donnée lue dans la mémoire, et lorsque la mémoire n'est pas accédée :
- lire la donnée enregistrée (<DTI'>) dans l'espace de stockage et l'adressé enregistrée (<ADI>) en association avec la donnée enregistrée, lire la donnée (<DTr>) dans la mémoire, en utilisant l'adresse enregistrée,,
- comparer la donnée enregistrée dans l'espace de stockage à la donnée lue dans la mémoire, et
- activer un signal d'erreur (ERR) si la donnée lue dans la mémoire est différente de la donnée enregistrée dans l'espace de stockage.

2. Procédé selon la revendication 1, dans lequel plusieurs données (<DTI>) sont lues dans la mémoire (MEM1), chaque donnée lue (<DTI>) dans la mémoire (MEM1) étant enregistrée dans l'espace de stockage (REGB) en association avec son adresse ((<ADI>) dans la mémoire.

3. Procédé selon la revendication 1, dans lequel plusieurs données lues (<DTI>) à des adresses consécutives (<ADI>) dans la mémoire (MEM1) sont enregistrées dans l'espace de stockage (REGB2) en association avec une seule adresse et un nombre (CPT1-CPTn) correspondant au nombre de données enregistrées en association avec l'adresse.

4. Procédé selon l'une des revendications 1 à 2, dans lequel les données (<DTI>) enregistrées dans l'espace de stockage (REGB) sont vérifiées suivant un ordre aléatoire.

5. Procédé selon l'une des revendications 1 à 2, dans lequel les données (<DTI>) lues dans la mémoire (MEM) sont enregistrées aléatoirement dans l'espace de stockage.

6. Procédé selon l'une des revendications 1 à 5, comprenant une étape d'interruption de la lecture de la mémoire (MEM1) lorsque l'espace de stockage (REGB) est plein, pour vérifier si les données enregistrées dans l'espace de stockage sont identiques aux données correspondantes dans la mémoire.

7. Procédé selon la revendication 5, dans lequel l'interruption de la lecture de la mémoire est effectuée soit en bloquant le signal d'horloge cadençant une unité de traitement (UC) accédant à la mémoire (MEM1), soit en déclenchant l'exécution par l'unité de traitement d'une routine d'attente mémorisée dans une autre mémoire.

8. Dispositif de protection de la lecture d'une mémoire (MEM1),
**caractérisé en ce qu'**il comprend :
- un espace de stockage (REGB) pour enregistrer une donnée (<DTI>) lue dans la mémoire (MEM1), et une adresse (<ADI>) de la mémoire en association avec la donnée enregistrée, des moyens configurés pour enregistrer dans ledit espace de stockage (REGB) une donnée lue dans la mémoire (MEM1) en association avec l'adresse de la donnée lue dans la mémoire (MEM1), et lorsque la mémoire n'est pas accédée :
- des moyens pour lire la donnée enregistrée (<DTI'>) dans l'espace de stockage (REGB) en association avec l'adresse (<ADI>) de la donnée lue dans la mémoire (MEMI), et pour lire la donnée dans la mémoire en) utilisant l'adresse enregistrée,
- un comparateur (COMP) pour comparer la donnée enregistrée (<DTI'>) dans l'espace de stockage à la donnée (<DTr>) lue dans la mémoire, et
- des moyens pour activer un signal d'erreur (ERR) si la donnée enregistrée dans l'espace de stockage est différente de la donnée lue dans la mémoire.

9. Dispositif selon la revendication 8, dans lequel l'espace de stockage (REGB, REGB1) mémorise plusieurs données et pour chaque donnée enregistrée (<DTI>), l'adresse (<ADI>) de la donnée dans la mémoire (MEM1).

10. Dispositif selon la revendication 8, dans lequel l'espace de stockage (REGB2) mémorise une seule adresse pour un ensemble de donnée enregistrées se trouvant à des adresses consécutives dans la mémoire (MEM1), et un nombre (CPT1-CPTn) correspondant au nombre de données dans l'ensemble de données.

11. Dispositif selon la revendication 10, dans lequel les données (<DTI>) sont enregistrées dans l'espace de stockage (REGB) dans une pile (DTA) gérée en mode FIFO ou LIFO.

12. Dispositif selon la revendication 9, dans lequel les données (<DTI>) et les adresses (<ADI>) sont enregistrées dans l'espace de stockage (REGB) dans une pile (ADA) gérée en mode FIFO ou LIFO.

13. Dispositif selon l'une des revendications 8 à 12, intégré à la mémoire (MEM1) à protéger.

14. Circuit intégré (ICI) comprenant une unité de traitement (UC) et une mémoire (MEM1) lue par l'unité de traitement,
**caractérisé en ce qu'**il comprend un dispositif de protection (RPCT) selon l'une des revendications 8 à 13 pour enregistrer chaque donnée (<DTI>) lue dans la mémoire (MEM1) par l'unité de traitement (UC) et pour vérifier chaque donnée enregistrée (<DTI'>) lorsque l'unité de traitement n'accède pas à la mémoire.

15. Circuit intégré selon la revendication 14, dans lequel le dispositif de protection (RPCT) comprend un multiplexeur (MUX1) disposé sur un bus d'adresse (ADB) connecté en entrée à un bus d'adresse de l'umité centrale (UC) et à l'espace de stockage (REGB), et en sortie au bus d'adresse de la mémoire (MEM1), pour appliquer à la mémoire une adresse de lecture provenant soit de l'unité centrale, soit de l'espace de stockage.

16. Circuit intégré selon l'une des revendications 14 et 15, dans lequel le dispositif de protection (RPCT) comprend des moyens (OG1) pour commander la lecture de la mémoire (MEM1) lorsque l'unité centrale (UC) n'accède pas à la mémoire.

## Patentansprüche

1. Verfahren zum Lesen eines in einem Speicher (MEM1) aufgezeichneten Datums, wobei das Verfahren Schritte der Auswahl einer Adresse (<ADI>) des Speichers, an der ein zu lesendes Datum (<DTI>) aufgezeichnet ist, und des Lesens des Datums im Speicher an der ausgewählten Adresse umfasst,
**dadurch gekennzeichnet, dass** es die folgenden Schritte umfasst:
- Aufzeichnen des gelesenen Datums (<DTI>) in einem Speicherplatz (REGB) in Verbindung mit der Adresse (<ADI>) des im Speicher gelesenen Datums, und, wenn nicht auf den Speicher zugegriffen wird:
- Lesen des im Speicherplatz aufgezeichneten Datums (<DTI'>) und der in Verbindung mit dem aufgezeichneten Datum aufgezeichneten Adresse (<ADI>), Lesen des Datums (<DTr>) im Speicher unter Verwendung der aufgezeichneten Adresse,
- Vergleichen des im Speicherplatz aufgezeichneten Datums mit dem im Speicher gelesenen Datum, und
- Aktivieren eines Fehlersignals (ERR), falls das im Speicher gelesene Datum von dem im Speicherplatz aufgezeichneten Datum unterschiedlich ist.

2. Verfahren nach Anspruch 1, bei dem mehrere Daten (<DTI>) im Speicher (MEM1) gelesen werden, wobei jedes im Speicher (MEM1) gelesene Datum (<DTI>) im Speicherplatz (REGB) in Verbindung mit seiner Adresse (<ADI>) im Speicher aufgezeichnet wird.

3. Verfahren nach Anspruch 1, bei dem mehrere an aufeinanderfolgenden Adressen (<ADI>) im Speicher (MEM1) gelesene Daten (<DTI>) im Speicherplatz (REGB2) in Verbindung mit einer einzigen Adresse und einer Zahl (CPT1-CPTn), die der Anzahl von in Verbindung mit der Adresse aufgezeichneten Daten entspricht, aufgezeichnet werden.

4. Verfahren nach einem der Ansprüche 1 bis 2, bei dem die im Speicherplatz (REGB) aufgezeichneten Daten (<DTI>) gemäß einer zufälligen Reihenfolge geprüft werden.

5. Verfahren nach einem der Ansprüche 1 bis 2, bei dem die im Speicher (MEM) gelesenen Daten (<DTI>) nach dem Zufallsprinzip im Speicherplatz aufgezeichnet werden.

6. Verfahren nach einem der Ansprüche 1 bis 5, das einen Schritt des Unterbrechens des Lesens des Speichers (MEM1) umfasst, wenn der Speicherplatz (REGB) voll ist, um zu prüfen, ob die im Speicherplatz aufgezeichneten Daten mit den entsprechenden Daten im Speicher identisch sind.

7. Verfahren nach Anspruch 5, bei dem die Unterbrechung des Lesens des Speichers entweder durch Blockieren des Taktsignals, das eine auf den Speicher (MEM1) zugreifende Verarbeitungseinheit (UC) taktet, ausgeführt wird, oder durch Auslösen der Ausführung durch die Verarbeitungseinheit eines in einem anderen Speicher gespeicherten Warteprogramms.

8. Vorrichtung zum Schützen des Lesens eines Speichers (MEM1),
**dadurch gekennzeichnet, dass** sie Folgendes umfasst:
- einen Speicherplatz (REGB) zum Aufzeichnen eines im Speicher (MEM1) gelesenen Datums (<DTI>) und einer Adresse (<ADI>) des Speichers in Verbindung mit dem aufgezeichneten Datum, Mittel, die konfiguriert sind, um im Speicherplatz (REGB) ein im Speicher (MEM1) gelesenes Datum in Verbindung mit der Adresse des im Speicher (MEM1) gelesenen Datums aufzuzeichnen, und, wenn nicht auf den Speicher zugegriffen wird:
- Mittel zum Lesen des im Speicherplatz (REGB) aufgezeichneten Datums (<DTI'>) in Verbindung mit der Adresse (<ADI>) des im Speicher (MEM1) gelesenen Datums, und zum Lesen des Datums im Speicher unter Verwendung der aufgezeichneten Adresse,
- einen Komparator (COMP) zum Vergleichen des im Speicherplatz aufgezeichneten Datums (<DTI'>) mit dem im Speicher gelesenen Datum (<DTr>), und
- Mittel zum Aktivieren eines Fehlersignals (ERR), falls das im Speicherplatz aufgezeichnete Datum von dem im Speicher gelesenen Datum unterschiedlich ist.

9. Vorrichtung nach Anspruch 8, bei der der Speicherplatz (REGB, REGB1) mehrere Daten speichert und für jedes aufgezeichnete Datum (<DTI>) die Adresse (<ADI>) des Datums im Speicher (MEM1).

10. Vorrichtung nach Anspruch 8, bei der der Speicherplatz (REGB2) eine einzige Adresse für einen Satz aufgezeichneter Daten speichert, die sich an aufeinanderfolgenden Adressen im Speicher (MEM1) befinden, und eine Zahl (CPT1-CPTn), die der Anzahl von Daten im Datensatz entspricht.

11. Vorrichtung nach Anspruch 10, bei der die Daten (<DTI>) im Speicherplatz (REGB) in einem im FIFO- oder LIFO-Modus verwalteten Stapel (DTA) aufgezeichnet werden.

12. Vorrichtung nach Anspruch 9, bei der die Daten (<DTI>) und die Adressen (<ADI>) im Speicherplatz (REGB) in einem im FIFO- oder LIFO-Modus verwalteten Stapel (ADA) aufgezeichnet werden.

13. Vorrichtung nach einem der Ansprüche 8 bis 12, die in dem zu schützenden Speicher (MEM1) integriert ist.

14. Integrierte Schaltung (IC1), die eine Verarbeitungseinheit (UC) und einen Speicher (MEM1), der von der Verarbeitungseinheit gelesen wird, umfasst, **dadurch gekennzeichnet, dass** sie eine Schutzvorrichtung (RPCT) nach einem der Ansprüche 8 bis 13 umfasst, um jedes im Speicher (MEM1) von der Verarbeitungseinheit (UC) gelesene Datum (<DTI>) aufzuzeichnen, und um jedes aufgezeichnete Datum (<DTI'>) zu prüfen, wenn die Verarbeitungseinheit nicht auf den Speicher zugreift.

15. Integrierte Schaltung nach Anspruch 14, bei der die Schutzvorrichtung (RPCT) einen Multiplexer (MUX1) umfasst, der auf einem Adressbus (ADB) angeordnet ist, der am Eingang mit einem Adressbus der Zentraleinheit (UC) und mit dem Speicherplatz (REGB) verbunden ist, und am Ausgang mit dem Adressbus des Speichers (MEM1), um an den Speicher eine Leseadresse anzuwenden, die entweder von der Zentraleinheit oder von dem Speicherplatz kommt.

16. Integrierte Schaltung nach einem der Ansprüche 14 und 15, bei der die Schutzvorrichtung (RPCT) Mittel (OG1) umfasst, um das Lesen des Speichers (MEM1) zu steuern, wenn die Zentraleinheit (UC) nicht auf den Speicher zugreift.

## Claims

1. A method for reading a datum saved in a memory (MEM1), the method comprising steps of selecting an address (<ADI>) of the memory in which a datum to be read (<DTI>) is saved, and of reading the datum in the memory at the selected address,
**characterized in that** it comprises steps of:
- saving the datum read (<DTI>) in a storage space (REGB), in association with the address (<ADI>) of the datum read in the memory, and when the memory is not accessed:
- reading the datum saved (<DTI'>) in the storage space and the address saved (<ADI>) in association with the datum saved, reading the datum (<DTr>) in the memory by using the address saved,
- comparing the datum saved in the storage space with the datum read in the memory, and
- activating an error signal (ERR) if the datum read in the memory is different from the datum saved in the storage space.

2. Method according to claim 1, wherein several data (<DTI>) are read in the memory (MEM1), each datum read (<DTI>) in the memory (MEM1) being saved in the storage space (REGB) in association with its address (<ADI>) in the memory.

3. Method according to claim 1, wherein several data read (<DTI>) at consecutive addresses (<ADI>) in the memory (MEM1) are saved in the storage space (REGB2) in association with a single address and a number (CPT1-CPTn) corresponding to the number of data saved in association with the address.

4. Method according to one of claims 1 to 2, wherein the data (<DTI>) saved in the storage space (REGB) are checked according to a random order.

5. Method according to one of claims 1 to 2, wherein the data (<DTI>) read in the memory (MEM) are saved randomly in the storage space.

6. Method according to one of claims 1 to 5, comprising a step of interrupting the reading of the memory (MEM1) when the storage space (REGB) is full, to check whether the data saved in the storage space are identical to the corresponding data in the memory.

7. Method according to claim 5, wherein the reading of the memory is interrupted either by blocking the clock signal pacing a central processing unit (UC) accessing the memory (MEM1), or by triggering the execution by the central processing unit of a waiting routine stored in another memory.

8. A device for protecting the reading of a memory (MEM1),
**characterized in that** it comprises:
- a storage space (REGB) for saving a datum (<DTI>) read in the memory (MEM1), and an address (<ADI>) of the memory in association with the datum saved, means configured for saving in said storage space (REGB) a datum read in the memory (MEM1) in association with the address of the datum read in the memory (MEM1), and when the memory is not accessed:
- means for reading the datum saved (<DTI'>) in the storage space (REGB) in association with the address (<ADI>) of the datum read in the memory (MEM1), and for reading the datum in the memory by using the address saved,
- a comparator (COMP) for comparing the datum saved (<DTI'>) in the storage space with the datum (<DTr>) read in the memory, and
- means for activating an error signal (ERR) if the datum saved in the storage space is different from the datum read in the memory.

9. Device according to claim 8, wherein the storage space (REGB, REGB1) stores several data, and for each datum saved (<DTI>), the address (<ADI>) of the datum in the memory (MEM1).

10. Device according to claim 8, wherein the storage space (REGB2) stores a single address for a set of saved data located at consecutive addresses in the memory (MEM1), and a number (CPT1-CPTn) corresponding to the number of data in the set of data.

11. Device according to claim 10, wherein the data (<DTI>) are saved in the storage space (REGB) in a stack (DTA) managed in FIFO or LIFO mode.

12. Device according to claim 9, wherein the data (<DTI>) and the addresses (<ADI>) are saved in the storage space (REGB) in a stack (ADA) managed in FIFO or LIFO mode.

13. Device according to one of claims 8 to 12, integrated into the memory (MEM1) to be protected.

14. An integrated circuit (IC1) comprising a central processing unit (UC) and a memory (MEM1) read by the central processing unit,
**characterized in that** it comprises a protection device (RPCT) according to one of claims 8 to 13 to save each datum (<DTI>) read in the memory (MEM1) by the central processing unit (UC) and to check each datum saved (<DTI'>) when the central processing unit does not access the memory.

15. Integrated circuit according to claim 14, wherein the protection device (RPCT) comprises a multiplexer (MUX1) disposed on an address bus (ADB) connected at input to an address bus of the central processing unit (UC) and to the storage space (REGB), and at output to the address bus of the memory (MEM1), to apply to the memory a read address coming either from the central processing unit, or from the storage space.

16. Integrated circuit according to one of claims 14 and 15, wherein the protection device (RPCT) comprises means (OG1) for controlling the reading of the memory (MEM1) when the central processing unit (UC) does not access the memory.
